# EUROPEAN PATENT APPLICATION

(11) **EP 3 502 321 A1**
(43) Date of publication of application: **26.06.2019**
(21) Application number: 17208920.3
(22) Date of filing: 20.12.2017
(51) Int. Cl.: C25D 5/38, G21C 3/07, C23C 4/08, G21C 3/20, C23C 28/02, C25D 13/02, C25D 13/14

(54) **METHOD OF FORMING A COATED COMPONENT MADE OF ZIRCONIUM OR ZIRCONIUM-BASED ALLOY**

(71) Applicant: Westinghouse Electric Sweden AB, 721 63 Västerås (SE)
(72) Inventor: MIDDLEBURGH, Simon, 722 33 Västerås (SE)
(74) Representative: Bjerkéns Patentbyrå KB (Stockholm)

(57) **Abstract**

The present invention concerns a method of forming a coated component. The method comprises:
providing a component made of Zr or a Zr-based alloy,
depositing, in a first deposition step, Cr or a Cr-based alloy onto an external surface of said component, wherein the Cr or Cr-based alloy is deposited by cold spray or a vapour deposition method,
depositing, in a second deposition step, onto an external surface of the component from the first step, Cr or a Cr-based alloy by means of an electrophoretic deposition method, such that said coated component is obtained.

The invention also concerns a method of producing and using a coated component.

## Description

### BACKGROUND OF THE INVENTION AND PRIOR ART

The present invention concerns the formation of a protective Cr coating on a component made of Zr or of a Zr-based alloy (hereinafter, for simplicity, also referred to as a Zr component). Such components are used for example within the field of nuclear reactors. For example, cladding tubes in which the nuclear fuel is positioned can be made of a Zr-based alloy. Also other components in a nuclear reactor core can be made of Zr or Zr-based alloys. However, Zr components are used also in other technical fields. The present invention is therefore not limited to the field of nuclear reactors.

A Cr coating may be applied by an electrolytic process.

When Zr components are exposed to oxygen (for example in air) a non-conductive oxide layer forms on the surface. This layer prevents the necessary electronic current to flow to the material surface in contact with a Cr solution, when for example electroplating the Cr coating onto the Zr component. It may therefore be difficult to perform the electroplating method. Additionally, Zr has extremely poor electric conductivity further reducing the efficiency of the electroplating processes.

US 3,502,549 describes a method of depositing Cr on a Zr component. According to this document, a particular electrolytic bath is used.

US 4,017,368 describes electroplating of for example Cr on a Zr substrate. This document describes the use of a particular electrolytic activating solution.

US 4,137,131 also describes electrolytic deposition of a metal on a Zr article. Also this document describes the use of a particular activating solution.

US 2015/0348652 A1 describes deposition of Cr on a Zr component. Before the Cr is deposited, a first coating of another material is deposited.

US 2015/0050521 A1 describes a multilayer coating on a Zr substrate. The document mentions different possible deposition methods.

The documents described above suggest different more or less complicated methods of depositing for example Cr on a Zr substrate.

### SUMMARY OF THE INVENTION

An object of the present invention is to provide a rather simple method of forming a hermetic Cr coating on Zr or on a Zr-based alloy. An object is thereby to provide a non-porous and watertight coating of Cr on the Zr component. A further object is to provide a rather simple method which makes it possible to deposit the Cr coating even if there is an oxide layer on the Zr component.

The above objects are achieved by a method as defined in claim 1.

It should be noted that when in this description "Cr" or "Cr coating" is mentioned, the Cr can be either pure Cr or a Cr-based alloy. Similarly, Zr may also be a Zr-based alloy.

By using cold spray or a vapour deposition method for the first deposition step, it is ensured that Cr will contact the underlying Zr component. Even if there is a naturally formed oxide layer on the Zr component, Cr will, by the use of the mentioned deposition methods, be able to penetrate through such oxide layer or annihilate the oxide layer and contact the Zr component. Cr will thus be in contact with the Zr component, at the same time as Cr is now available to a solution to be used in the second deposition step. By the second deposition step, a dense, non-porous and watertight coating of Cr is obtained. The second deposition step can be performed in a simple manner, for example by electrodeposition, without the need for any specific complicated activating solution, like in some of the documents described above.

In the second deposition step, additional Cr is thus deposited over the Cr deposited in the first deposition step.

The concept Zr-based alloy means that Zr is the base element in the alloy. Preferably, the the Zr-based alloy contains at least 95 weight percent Zr.

The concept Cr-based alloy means that Cr is the base element in the alloy. Preferably, the Cr-based alloy contains at least 90 weight percent Cr. For example, the Cr-based alloy may contain up to 5 weight percent alloying additions, such as Al.

It should be noted that metals and metal alloys always include some impurities. The mentioned component of Zr or a Zr-based alloy may thus contain impurities in an amount that is normal and allowed within the field of the intended use of the component. Similarly for the Cr or Cr-based alloy.

The mentioned "component" could possibly constitute only a part of an article. For example, the article could consist of two parts: a first part of a first material connected to a second part of Zr or a Zr-based alloy. In this example the second part thus constitutes the "component". However, according to a preferred embodiment, substantially the whole article is made of Zr or a Zr-based alloy.

The concept "external surface" means a portion of the component that is not covered by any other substantial metallic material layer. In case the component is a tube, the external surface can thus in principle be either on the outside of the tube or on the inside of the tube (facing the interior) or both the outside and the inside. Preferably it is the outside of the tube.

The preferred method to use for the first deposition step is cold spray. If a vapour deposition method is used, then a preferred method is a physical vapour deposition (PVD) method, in particular a plasma enhanced vapour deposition.

Preferably, the method comprises only the two mentioned deposition steps, i.e. no further deposited layer is necessary. The present invention thus provides a good protective coating of Cr with just these two deposition steps.

According to one manner of carrying out the method according to the invention, the component, before the first deposition step, has an external oxide layer formed naturally under ambient conditions. As mentioned above, the present invention is particularly suitable when the component has an external oxide layer that has formed naturally in contact with the air under ambient conditions.

According to a further manner of carrying out the method, said first deposition step is carried out such that the Cr or Cr-based alloy will break through the oxide layer and make contact with the Zr or Zr-alloy material of said component. By using for example cold spray or a plasma enhanced vapour deposition method, Cr will break through the oxide layer. Consequently, a conductive Cr coating, in contact with the underlying Zr component, will now be available for the second deposition step.

According to a further manner of carrying out the method, said first deposition step is carried out in an inert atmosphere. Since the first deposition step is carried out in an inert atmosphere, further oxidation will be prevented. The inert atmosphere may for example be a gas mixture of He, Ar and N₂.

According to a further manner of carrying out the method, said first deposition step is carried out such that at least 90% of the external surface to be deposited is covered by the Cr or Cr-based alloy. Since a large portion of the external surface is coated by Cr, it is ensured that there will be a substantial area of Cr that is in electrically conducting contact with the underlying Zr component.

According to a further manner of carrying out the method, said electrophoretic deposition method is electrodeposition. Electrodeposition is a well-known and reliable method for carrying out a deposition of metal onto an underlying surface. Such a method is therefore particularly useful for the second deposition step. It should be noted that electrophoretic deposition (EPD) is a term for a broad range of industrial processes which includes electrocoating, cathodic electrodeposition, anodic electrodeposition, and electrophoretic coating, or electrophoretic painting. A characteristic feature of this process is that constituent coating material is initially in a liquid medium and migrates under the influence of an electric field (electrophoresis) and is subsequently deposited onto an electrode.

According to a further manner of carrying out the method, said method is carried out such that the Cr or Cr-based alloy deposited by the first deposition step has a layer thickness of less than 50 µm, preferably 5-20 µm. According to the invention it is thus sufficient if only a thin coating is produced by the first deposition step.

According to a further manner of carrying out the method, said method is carried out such that after the second deposition step the Cr or Cr-based alloy deposited has a total layer thickness up to 60 µm, preferably 15-30 µm. Such a thickness is sufficient for protecting the Zr component.

According to a further manner of carrying out the method, said coated component is designed for use in a nuclear power reactor. The present invention is particularly useful for forming a protective coating on a Zr component for use in a nuclear power reactor.

According to a further manner of carrying out the method, said coated component is a cladding tube for nuclear fuel. By providing a cladding tube for nuclear fuel with a protective Cr coating, the cladding tube can be used for more accident tolerant nuclear fuel. If no Cr coating is used, then Zr may react with H₂O and form zirconium oxide and H₂. The formation of such hydrogen gas may be disadvantageous to the nuclear fuel rods.

The invention also relates to a method of producing and using a coated component. According to this aspect of the invention, the method of producing and using a coated component comprises:
producing a coated component with a method according to any one of the preceding manners, and
installing the coated component in a nuclear power reactor.

Through this advantageous aspect of the invention, a coated component with the advantages described above is thus actually installed in a nuclear power reactor.

According to a manner of carrying out the method according to this aspect of the invention, the coated component is then used during operation of the nuclear power reactor. According to this aspect, an advantageous component, produced by the method of the invention, is thus actually used during operation in a nuclear power reactor.

According to a further manner of carrying out the method according to this aspect of the invention, said coated component is a cladding tube for nuclear fuel, and nuclear fuel is arranged in said cladding tube before installing the coated component in the nuclear power reactor. As explained above, the invention is particularly useful for a cladding tube for nuclear fuel.

### BRIEF DESCRIPTION OF THE DRAWINGS

- Fig. 1: shows schematically a sectional view of a component, in the form of a cladding tube for nuclear fuel, used in a manner of carrying out the present invention.
- Fig. 2: shows schematically a detailed view of the part of Fig. 1 indicated by dashed lines in Fig. 1.
- Fig. 3: shows schematically the same view as Fig. 2 after a first step, in a manner of carrying out the present invention, has been carried out.
- Fig. 4: shows schematically the same view as Fig. 2 and 3, after a second step, in a manner of carrying out the present invention, has been carried out.
- Fig. 5: shows schematically a flow chart of a manner of carrying out the present invention.

### DESCRIPTION OF MANNERS OF CARRYING OUT THE PRESENT INVENTION

Examples of the present invention will now be described with reference to the figures.

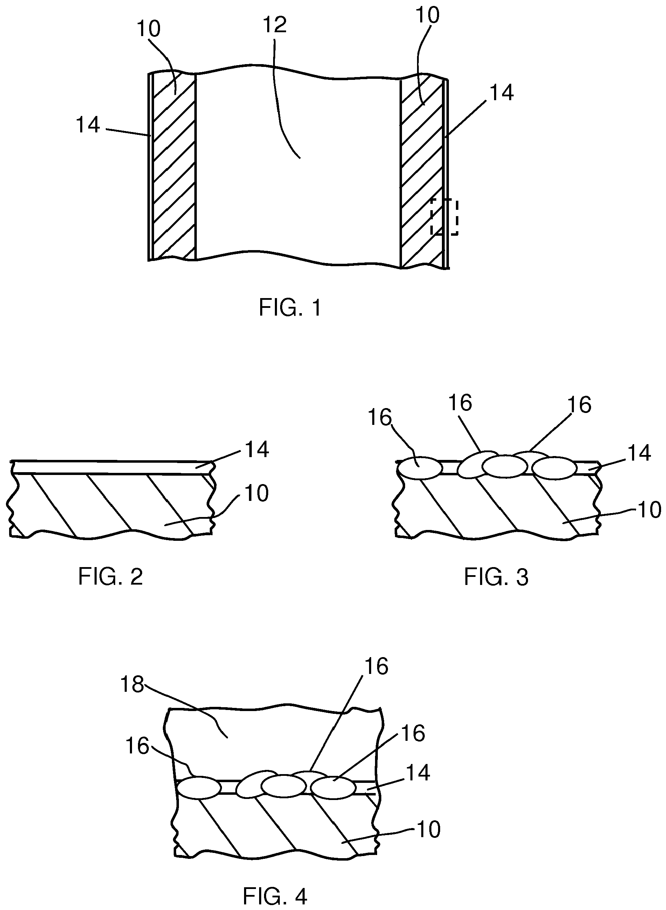

Fig. 1 shows schematically a sectional view of a part of a tubular component. In this example, the component is a cladding tube for nuclear fuel. Fig. 1 shows an enlarged sectional view, not drawn to scale, of such a component. The component is made of a Zr-based alloy 10. This alloy comprises, according to this example, at least 95 weight percent Zr. Different such alloys are known in the technical field of nuclear fuel components. The component has an oxide layer 14. The Zr-based alloy may for example have been oxidized simply by being surrounded by air. The oxide layer 14 is normally quite thin, for example 1-3 µm.

The component of Fig. 1 has a hollow interior 12. The component has an external surface, in particular at the oxide layer 14.

Fig. 2 shows schematically a view of the part of Fig. 1 shown by dashed lines.

In a first step of this manner of carrying out the invention, a component, for example as shown in Fig. 1, is provided.

In a second step Cr or a Cr-based alloy (for example Cr with up to 5 weight percent alloying elements, such as Al) 16 is deposited onto an external surface of the component by, in this example, cold spray. By cold spray, Cr 16 is deposited such that it penetrates through the oxide layer 14 and reaches the underlying Zr-based alloy 10. The average size of the Cr particles deposited by the cold spray method may be about 1-50 µm.

Fig. 3 shows schematically the component after this first deposition step. At least 90% of the external surface is covered by Cr 16. The thickness of the Cr layer deposited by the first step may for example be about 6 µm.

The first deposition step is carried out in an inert atmosphere.

It should be noted that also other deposition methods than cold spray can be used for the first deposition step, for example a physical vapour deposition method, in particular a plasma enhanced vapour deposition method.

In a second deposition step, Cr or a Cr-based alloy is deposited onto an external surface of the component from the first deposition step, by means of an electrophoretic deposition method. According to this example, electroplating is used.

Fig. 4 shows schematically the component after the second deposition step. A layer 18 of Cr is thus provided by the second deposition step. The thickness of the Cr layer 18 deposited during the second deposition step may for example be about 3 times the thickness of the Cr layer produced by the first deposition step. The total thickness of the Cr layer after the second deposition step (i.e. also including the Cr deposited during the first step) may for example be 25 µm.

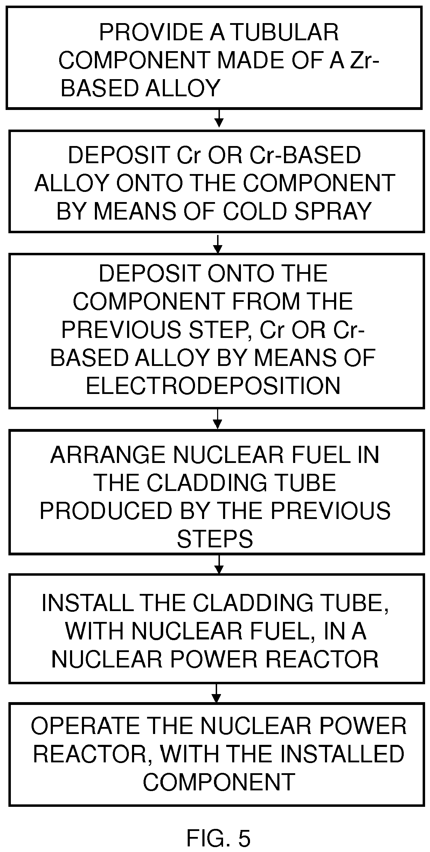

In a further step, as indicated in Fig. 5, according to this example of the invention, nuclear fuel is arranged inside the cladding tube produced after the second deposition step. A fuel rod has thus been produced.

In a still further step, the fuel rod is installed in a nuclear power reactor. This component is then used during operation of the nuclear power reactor.

It should be noted that according to this example, a cladding tube for nuclear fuel has been produced. However, there are several other nuclear fuel components that are also made of Zr or of a Zr-based alloy. For example, spacer grids for a nuclear fuel assembly can be made of such a material. Another example is a fuel box (fuel channel) that surrounds a bundle of fuel rods in a boiling water nuclear reactor. Also such a fuel box (fuel channel) can be produced by a Zr-based alloy. The present invention is thus applicable also to such components. However, the present invention is not limited to components in a nuclear reactor, but can be applied to other components made of Zr of a Zr-based alloy.

The present invention is thus not limited to the examples described herein, but can be varied and modified within the scope of the following claims.

## Claims

1. A method of forming a coated component, the method comprising:
providing a component made of Zr or a Zr-based alloy,
depositing, in a first deposition step, Cr or a Cr-based alloy onto an external surface of said component, wherein the Cr or Cr-based alloy is deposited by cold spray or a vapour deposition method,
depositing, in a second deposition step, onto an external surface of the component from the first step, Cr or a Cr-based alloy by means of an electrophoretic deposition method, such that said coated component is obtained.

2. A method according to claim 1, wherein the component, before the first deposition step, has an external oxide layer formed naturally under ambient conditions.

3. A method according to claim 2, wherein said first deposition step is carried out such that the Cr or Cr-based alloy will break through the oxide layer and make contact with the Zr or Zr-alloy material of said component.

4. A method according to any one of the preceding claims, wherein said first deposition step is carried out in an inert atmosphere.

5. A method according to any one of the preceding claims, wherein said first deposition step is carried out such that at least 90% of the external surface to be deposited is covered by the Cr or Cr-based alloy.

6. A method according to any one of the preceding claims, wherein said electrophoretic deposition method is electrodeposition.

7. A method according to any one of the preceding claims, wherein said method is carried out such that the Cr or Cr-based alloy deposited by the first deposition step has a layer thickness of less than 50 µm, preferably 5-20 µm.

8. A method according to any one of the preceding claims, wherein said method is carried out such that after the second deposition step the Cr or Cr-based alloy deposited has a total layer thickness of up to 60 µm, preferably 15-30 µm.

9. A method according to any one of the preceding claims, wherein said coated component is designed for use in a nuclear power reactor.

10. A method according to claim 9, wherein said coated component is a cladding tube for nuclear fuel.

11. A method of producing and using a coated component, comprising:
producing a coated component with a method according to any one of the preceding claims, and
installing the coated component in a nuclear power reactor.

12. A method according to claim 11, wherein the coated component is then used during operation of the nuclear power reactor.

13. A method according to claim 11 or 12, wherein said coated component is a cladding tube for nuclear fuel, and wherein nuclear fuel is arranged in said cladding tube before installing the coated component in the nuclear power reactor.
